# EUROPEAN PATENT SPECIFICATION

(11) **EP 4 002 799 B1**
(45) Date of publication and mention of the grant of the patent: **13.08.2025**
(21) Application number: 21207004.9
(22) Date of filing: 08.11.2021
(51) Int. Cl.: H04L 41/06, B60W 50/02, H04L 43/0817, H04L 43/0811

(54) **VEHICULAR CONTROL SYSTEM, ANOMALY DETECTION METHOD FOR VEHICULAR CONTROL SYSTEM, AND ANOMALY DETECTION PROGRAM FOR VEHICULAR CONTROL SYSTEM**
FAHRZEUGSTEUERUNGSSYSTEM, ANOMALIEERKENNUNGSVERFAHREN FÜR EIN FAHRZEUGSTEUERUNGSSYSTEM UND ANOMALIEERKENNUNGSPROGRAMM FÜR EIN FAHRZEUGSTEUERUNGSSYSTEM
SYSTÈME DE COMMANDE DE VÉHICULE, PROCÉDÉ DE DÉTECTION D'ANOMALIE POUR SYSTÈME DE COMMANDE DE VÉHICULE ET PROGRAMME DE DÉTECTION D'ANOMALIE POUR SYSTÈME DE COMMANDE DE VÉHICULE

(30) Priority: 18.11.2020 JP 2020191342
(43) Date of publication of application: 25.05.2022
(73) Proprietor: Toyota Jidosha Kabushiki Kaisha, Toyota-shi, Aichi-ken, 471-8571 (JP)
(72) Inventor: TOKUNAGA, Yutaka, TOYOTA-SHI, AICHI, 471-8571 (JP)
(74) Representative: Cabinet Beau de Loménie

(56) References cited:
- EP-A2- 3 023 959
- JP-A- 2018 016 106
- JP-A- 2019 009 714
- US-A1- 2018 278 616
- US-A1- 2019 302 753

## Description

### BACKGROUND OF THE INVENTION

### Field of the invention:

The present invention relates to a vehicular control system that has an anomaly detection function (self-diagnosis function).

### Description of the related art:

Conventionally, a vehicular control system having an anomaly detection function (hereinafter referred to as the "conventional apparatus") has been known (see, for example, Japanese Patent Application Laid-Open (kokai) No. 2018-016106).

The conventional apparatus includes a first unit and a second unit. The first unit and the second unit are connected to each other via a first communication cable (network). Namely, in the conventional apparatus, data are transferred from the first unit to the second unit via the first communication cable. Furthermore, the first unit and the second unit are connected to each other via a second communication cable, which is different from the first communication cable. A predetermined signal representing the state of the first unit (whether or not the first unit is in an anomalous state) is transmitted to the second unit via this second communication cable. The second unit determines (diagnoses) the state of the first unit on the basis of the predetermined signal.

In the above-described conventional apparatus, in addition to the first communication cable for transferring the data from the first unit to the second unit, the second communication cable is provided for transmission of the predetermined signal from the first unit to the second unit. As a result, product cost increases due to, for example, an increased number of wires and an increased number of connector pins.

One object of the present invention is to provide an inexpensive vehicular control system which includes two units connected to each other via an electric wire for communications and which has an anomaly detection function.

A vehicular control system of the present invention is defined in claim 1.

In the vehicular control system of the present invention, in a state in which the data communication line is not used as a path for transferring data, the monitoring apparatus utilizes the data communication line as a path for transmitting the anomaly reporting signal. Accordingly, the vehicular control system of the present invention can reduce the number and cost of components as compared with the case where an electrical wire serving as a path for transmitting the anomaly reporting signal is provided separately from the data communication line serving as a path for transferring data.

In the vehicular control system of the present invention, the monitoring apparatus may be configured
to transmit, as the anomaly reporting signal, a first signal from the first connection portion to the second connection portion via the data communication line in the case where the monitoring apparatus determines that the first unit is in the data transfer nonperformable state because a component which constitutes the first unit is in a predetermined particular state, and
to transmit, as the anomaly reporting signal, a second signal, which is different from the first signal, from the first connection portion to the second connection portion via the data communication line in the case where the monitoring apparatus determines that the component which constitutes the first unit is in a state different from the particular state, and the first unit is in the data transfer nonperformable state.

By virtue of this configuration, it is possible to determine whether the first unit is in a particular state or in a state different from the particular state, in a situation where the first unit is in the above-mentioned data transfer nonperformable state.

In the vehicular control system of the present invention, the monitoring apparatus determines that the first unit is in the data transfer performable state in the case where a component which constitutes the first unit has a temperature equal to or lower than a predetermined threshold temperature, and determines that the first unit is in the data transfer nonperformable state in the case where the component which constitutes the first unit has a temperature higher than the predetermined threshold temperature.

By virtue of this configuration, a user can know the temperature of the first unit from the piece of information provided by the information providing apparatus.

In the vehicular control system of the present invention, the first unit includes a power supply module for supplying electric power to the transmitter.

In this case, the monitoring apparatus permits supply of electric power from the power supply module to the transmitter in the case where the component which constitutes the first unit has a temperature equal to or lower than the predetermined threshold temperature, and interrupts the supply of electric power from the power supply module to the transmitter in the case where the component which constitutes the first unit has a temperature higher than the predetermined threshold temperature.

By virtue of this configuration, it is possible to prevent rising of the temperature of the component constituting the first unit beyond the threshold temperature, which rising of temperature would otherwise result in breakage of that component and/or other components constituting the first unit.

Notably, the present disclosure describes a method used in the above-described vehicular control system and a computer program executed in the above-described vehicular control system.

In the above description, in order to facilitate understanding of the present invention, the constituent elements of the invention corresponding to those of an embodiment of the invention which will be described later are accompanied by parenthesized reference numerals and symbols which are used in the embodiment; however, the constituent elements of the invention are not limited to those in the embodiment defined by the reference numerals and symbols.

### BRIEF DESCRIPTION OF THE DRAWINGS

FIG. 1 is a block diagram of an onboard camera apparatus;
FIG. 2 is a flowchart showing a monitoring program according to a first embodiment of the present invention;
FIG. 3 is a flowchart showing a diagnosis program according to the first embodiment of the present invention;
FIG. 4 is an image which represents an analysis result obtained as a result of execution of the diagnosis program of FIG. 3 and which is an example of an image indicating that operation of a slave unit is stopped temporarily;
FIG. 5 is an image which represents another analysis result obtained as a result of execution of the diagnosis program of FIG. 3 and which is an example of an image indicating that the onboard camera apparatus must be repaired;
FIG. 6 is a block diagram showing operation of the onboard camera apparatus at normal temperature;
FIG. 7 is a block diagram showing operation of the onboard camera apparatus at high temperature;
FIG. 8 is a block diagram showing operation of the onboard camera apparatus in a state in which a communication device of the slave unit is in failure;
FIG. 9 is a table showing analysis results obtained as a result of execution of the diagnosis program of FIG. 3;
FIG. 10 is a flowchart showing a monitoring program according to a second embodiment of the present invention;
FIG. 11 is a flowchart showing a diagnosis program according to the second embodiment of the present invention;
FIG. 12 is a table showing analysis results obtained as a result of execution of the diagnosis program of FIG. 11;
FIG. 13 is an image which represents an analysis result obtained as a result of execution of the diagnosis program of FIG. 11 and which is an example of a first image indicating that the onboard camera apparatus must be repaired; and
FIG. 14 is an image which represents another analysis result obtained as a result of execution of the diagnosis program of FIG. 11 and which is an example of a second image indicating that the onboard camera apparatus must be repaired.

### DESCRIPTION OF THE PREFERRED EMBODIMENTS

### <First embodiment>

### Configuration:

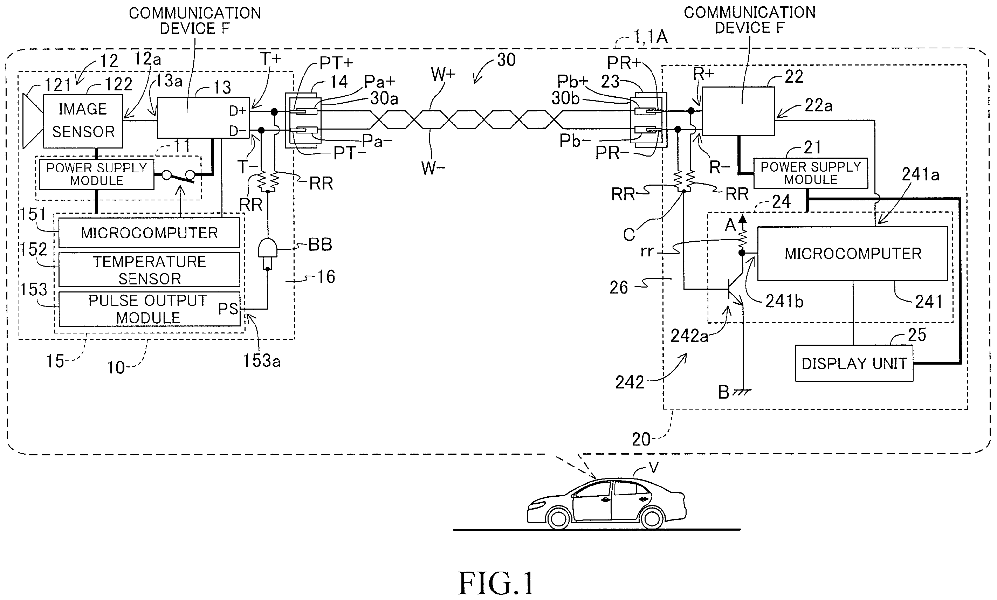

A vehicular control system according to a first embodiment of the present invention is an onboard camera apparatus 1 shown in FIG. 1, and the onboard camera apparatus 1 is mounted on a vehicle V.

The onboard camera apparatus 1 includes a slave unit 10 and a master unit 20. Furthermore, the onboard camera apparatus 1 includes a communication cable 30 for connecting together the slave unit 10 and the master unit 20. The slave unit 10 is housed in, for example, a case fixed to a windshield on the front side of a rear view mirror of the vehicle V. The master unit 20 is disposed in, for example, an instrument panel of the vehicle V.

The slave unit 10 includes a power supply module 11, a digital camera 12, a communication device 13, a connector 14, and a controller 15. Furthermore, the slave unit 10 includes a printed wiring board 16. The power supply module 11, the digital camera 12, the communication device 13, the connector 14, and electronic components of the controller 15 are mounted on the printed wiring board 16.

The power supply module 11 receives DC power from an unillustrated battery mounted on the vehicle V and converts the DC power in such a manner that the voltage (for example, 12 V) of the DC power is converted (stepped down) to a predetermined voltage (for example, 3.3 V). The power supply module 11 supplies the voltage-converted DC power to the digital camera 12, the communication device 13, and the controller 15. Notably, the power supply module 11 is configured to be capable of switching the state of power supply to the communication device 13 between "a state in which electric power is supplied to the communication device 13" and "a state in which no electric power is supplied to the communication device 13."

The digital camera 12 includes a lens 121 and an image sensor 122. The digital camera 12 photographs a scene ahead of the vehicle V at predetermined time intervals and generates image data representing the image of the scene (hereinafter referred to as the "original image") (hereinafter, the image data will be referred to as the "original image data"). The digital camera 12 has a terminal 12a for outputting the original image data.

The communication device 13 has a terminal 13a for receiving (obtaining) the original image data. The terminal 13a is connected to the terminal 12a of the digital camera 12. Furthermore, the communication device 13 includes a converter which converts the original image data received (obtained) from the digital camera 12 to low-voltage differential signals D+ and D-. The low-voltage differential signals are signals which meet specifications called "Low Voltage Differential Signaling (LVDS)." The low-voltage differential signals are signals which conform to physical layer specifications for serial interfaces, which are standardized as "ANSI/TIA/EIA-644." The low-voltage differential signals are signals whose amplitude is not 3.3 V but is a lower voltage (for example, about 350 mV) and which transfer data at a higher slew rate (see, for example, Japanese Patent No. 5860644 and Japanese Patent Application Laid-Open (kokai) Nos. 2017-204705 and 2020-177242). The signal D+ is also called positive signal, and the signal D- is also called negative signal. These signals vary in such a manner that they become opposite in phase to each other, with a single common mode voltage (for example, 1.2 V) serving as the center of the variation. The potential difference between the two signals is 350 mV.

Furthermore, the communication device 13 has terminals T+ and T- for outputting the low-voltage differential signals D+ and D-, respectively. The terminals T+ and T- are connected to contact pins PT+ and PT- of the connector 14, respectively.

The controller 15 includes a microcomputer 151, a temperature sensor 152, and a pulse output module 153. The microcomputer 151 includes an arithmetic unit (CPU), a storage (ROM, RAM, etc.), a timer, etc. The temperature sensor 152 detects the temperature T of the slave unit 10 (for example, the surface temperature of the digital camera 12) and supplies temperature data representing the detected temperature to the microcomputer 151. The pulse output module 153 generates a pulse signal PS. The frequency of the pulse signal PS is controlled by the microcomputer 151. In the first embodiment, the frequency of the pulse signal PS is 10 Hz, which is a first frequency. The amplitude (voltage) of the pulse signal PS is 3.3 V. The pulse output module 153 has a terminal 153a for outputting the pulse signal PS. The terminal 153a is connected to the contact pins PT+ and PT- of the connector 14 via a buffer element BB and resistors RR. The pulse output module 153 is configured to be capable of switching its pulse output state between "a state in which the pulse output module 153 outputs the pulse signal PS" and "a state in which the pulse output module 153 does not output the pulse signal PS."

The master unit 20 includes a power supply module 21, a communication device 22, a connector 23, a controller 24, and a display unit 25. Furthermore, the master unit 20 includes a printed wiring board 26. The power supply module 21, the communication device 22, the connector 23, and electronic components of the controller 24 are mounted on the printed wiring board 26.

The power supply module 21 receives DC power from the above-described vehicle-mounted battery and converts the DC power in such a manner that the voltage (for example, 12 V) of the DC power is converted (stepped down) to a predetermined voltage (for example, 3.3 V). The power supply module 21 supplies the voltage-converted DC power to the communication device 22, the controller 24, and the display unit 25.

The communication device 22 has terminals R+ and R- for receiving the low-voltage differential signals D+ and D-, respectively. The terminals R+ and R- are connected to contact pins PR+ and PR- of the connector 23, respectively. The communication device 22 includes a reverse converter for converting the received (obtained) low-voltage differential signals D+ and D- to the original image data (reconstructing the original image data). Furthermore, the communication device 22 has a terminal 22a for outputting the original image data obtained by converting the low-voltage differential signals D+ and D-.

The controller 24 includes a microcomputer 241 and a buffer circuit 242. The microcomputer 241 includes an arithmetic unit (CPU), a storage (ROM, RAM, etc.), a timer, etc. The microcomputer 241 has a terminal 241a for receiving (obtaining) the original image data. The terminal 241a is connected to the terminal 22a of the communication device 22. Furthermore, the microcomputer 241 has a terminal 241b for receiving (obtaining) the pulse signal. The terminal 241b is connected to the contact pins PR+ and PR- of the connector 23 via the buffer circuit 242. The buffer circuit 242 includes a transistor 242a. The collector of the transistor 242a is connected to the terminal 241b and is connected, via a resistor rr, to a point A whose potential is the same as the positive potential (voltage) output from the power supply module 21 (point where the logic level is "H"). The emitter of the transistor 242a is connected to a point B whose potential is the same as the ground potential of the power supply module 21 (point where the logic level is "L"). The base of the transistor 242a is connected to the contact pins PR+ and PR- of the connector 23 via resistors RR. The microcomputer 241 executes a diagnosis program, which will be described later, thereby determining (diagnosing) the state of the onboard camera apparatus 1 (whether or not the onboard camera apparatus 1 must be repaired).

The display unit 25 includes a liquid crystal display and a display controller. The display controller receives from the microcomputer 241 image data representing a predetermined image (characters, figures, etc.) and causing the liquid crystal display to display the image represented by the received image data.

The communication cable 30 includes two electrical wires W+ and W- and a pair of plugs 30a and 30b. The electrical wires W+ and W- correspond to the low-voltage differential signals D+ and D-, respectively. The electrical wire W+ and the electrical wire W- are twisted together. The plug 30a is attached to first ends of the electrical wires W+ and W-, and the plug 30b is attached to second ends of the electrical wires W+ and W-. The first ends of the electrical wires W+ and W- are connected to contact pins Pa+ and Pa- of the plug 30a, respectively, and the second ends of the electrical wires W+ and W- are connected to contact pins Pb+ and Pb- of the plug 30b, respectively. The plug 30a is plugged into the connector 14. In this state, the contact pins Pa+ and Pa- are in contact with and electrically connected to the contact pins PT+ and PT-, respectively. Meanwhile, the plug 30b is plugged into the connector 23. In this state, the contact pins Pb+ and Pb- are in contact with and electrically connected to the contact pins PR+ and PR-, respectively.

### Operation:

Operation of the onboard camera apparatus 1 will be roughly described. As described above, the slave unit 10 is disposed in the vehicle compartment to be located on the front side of the rear view mirror of the vehicle V. Therefore, there is a possibility that the temperature of the slave unit 10 (especially, the digital camera 12) becomes relatively high due to irradiation with sun light, whereby operation of the slave unit 10 becomes instable and/or components of the slave unit 10 deform due to heat. It is preferred to stop power supply to a component(s) generating heat (the communication device 13 in the present embodiment) so as to prevent damage to the slave unit 10. In view of this, as will be described below, the microcomputer 151 monitors (detects) the temperature T of the slave unit 10 and controls the power supply module 11 in accordance with the detected temperature T in a manner as described below.

In the case where the temperature T is equal to or lower than a predetermined threshold temperature Tth, the microcomputer 151 controls the power supply module 11 so that electrical power is supplied to the communication device 13. The communication device 13 converts the original image data to the low-voltage differential signals D+ and D- and outputs the low-voltage differential signals D+ and D-. The low-voltage differential signals D+ and D- are transmitted to the communication device 22 via the communication cable 30. The communication device 22 converts the low-voltage differential signals D+ and D- to the original image data and supplies the original image data to the microcomputer 241. Notably, in this case, the microcomputer 151 controls the pulse output module 153 so that the pulse signal PS is not output from the pulse output module 153.

Meanwhile, in the case where the temperature T is higher than the predetermined threshold temperature Tth, the microcomputer 151 controls the power supply module 11 so that the power supply to the communication device 13 is interrupted. When the power supply to the communication device 13 is interrupted, the communication device 13 stops its operation of converting the original image data to the low-voltage differential signals D+ and D-. Accordingly, the communication cable 30 is not used as a path for transmitting the low-voltage differential signals D+ and D-. Meanwhile, the microcomputer 151 controls the pulse output module 153 so that the pulse signal PS is output from the pulse output module 153. This pulse signal PS is transmitted to the controller 24 via the communication cable 30.

Incidentally, in the onboard camera apparatus 1, basically, the communication device 13 functions as a transmitter for transmitting the low-voltage differential signals D+ and D-, and the communication device 22 functions as a receiver for receiving the low-voltage differential signals D+ and D-. However, each of the communication device 13 and the communication device 22 has a bidirectional communication function (backward channel communication function) for transmitting and receiving a predetermined signal (signal different from the low-voltage differential signals D+ and D-) between the communication device 13 and the communication device 22. By using this bidirectional communication function, the communication device 13 and the communication device 22 determine whether or not they can communicate with each other. Specifically, the communication device 22 transmits a predetermined request signal to the communication device 13. When the communication device 13 receives the request signal, the communication device 13 transmits a predetermined response signal to the communication device 22. In the case where the communication device 22 has succeeded in receiving the response signal from the communication device 13 within a predetermined period of time subsequent to transmission of the request signal to the communication device 13, the communication device 22 updates the value of a communication error flag F stored in a flag register provided in the communication device 22 to "0" which indicates that the communication device 13 and the communication device 22 are "communicatable." Meanwhile, in the case where the communication device 22 has failed to receive the response signal from the communication device 13 within the predetermined period of time subsequent to transmission of the request signal to the communication device 13, the communication device 22 updates the value of the communication error flag F to "1" which indicates that the communication device 13 and the communication device 22 are "uncommunicatable." Meanwhile, in the case where the request signal from the communication device 22 has disappeared (in the case where the communication device 13 cannot receive the request signal even after elapse of the predetermined period of time), the communication device 13 updates the value of a communication error flag F provided in the communication device 13 to "1." When the communication device 13 updates the value of the communication error flag F to "1," after that point in time, the communication device 13 stops the communication between the communication device 13 and the communication device 22. Similarly, when the communication device 22 updates the value of the communication error flag F to "1," after that point in time, the communication device 22 stops the communication. Notably, the microcomputer 241 can read the communication error flag F of the communication device 22 if the communication device 22 is normal (is not out of order). The microcomputer 151 can read the communication error flag F of the communication device 13 if the communication device 13 is normal (is not out of order).

Furthermore, the microcomputer 241 detects whether or not the microcomputer 241 is receiving the pulse signal PS. The controller 24 determines (diagnoses) the state of the onboard camera apparatus 1 (whether or not repair is necessary) on the basis of the value of the read-out communication error flag F of the communication device 22 and the result of detection of the pulse signal PS. The controller 24 causes the display unit 25 to display an image representing the result of the determination.

Notably, every time the original image data is supplied from the communication device 22, the microcomputer 241 executes image recognition processing on the basis of the original image data. For example, the microcomputer 241 recognizes road signs, traffic lanes, etc. on the basis of the original image data, and transmits the recognition results to a microcomputer which controls the engine, brake, steering apparatus, etc. of the vehicle V. In other words, data based on the original image data are utilized by a controller for driver assistance control.

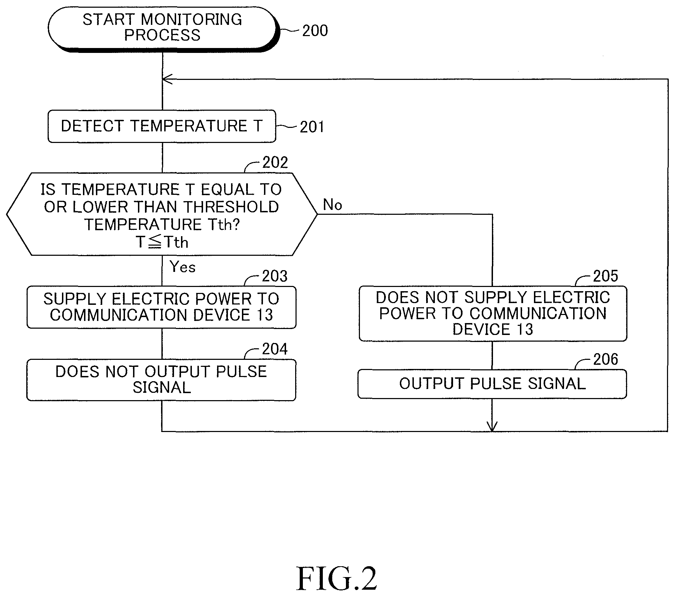

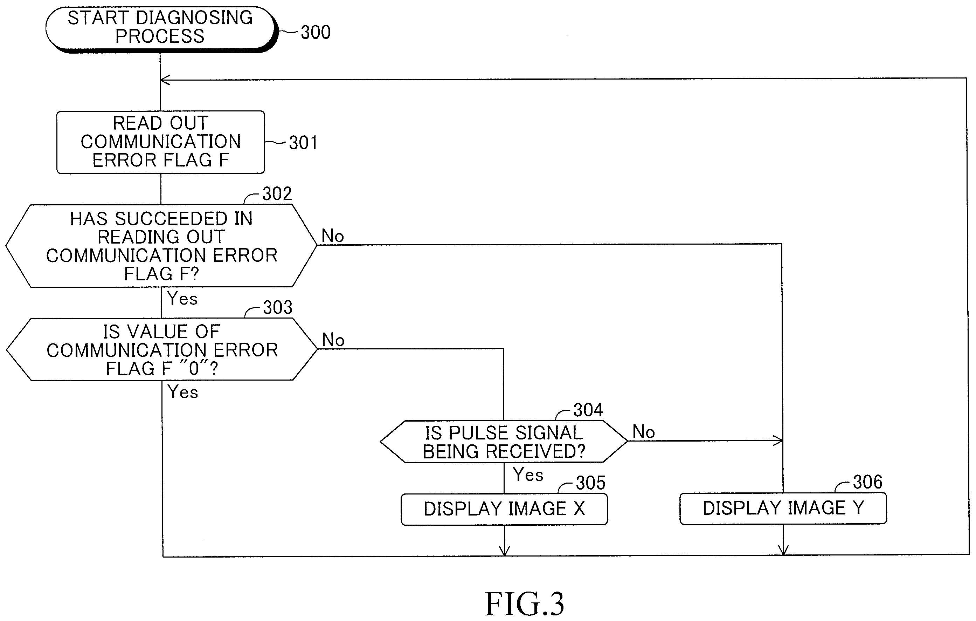

Next, specific operations of the microcomputer 151 and the microcomputer 241 will be described. When the engine of the vehicle V is started (or the drive source of the vehicle V is activated), the arithmetic unit of the microcomputer 151 (hereinafter referred to as the "slave CPU") starts execution of a monitoring program shown in FIG. 2. Furthermore, the arithmetic unit of the microcomputer 241 (hereinafter referred to as the "master CPU") starts execution of a diagnosis program shown in FIG. 3.

The slave CPU starts a monitoring process from step 200. Next, in step 201, the slave CPU obtains temperature data from the temperature sensor 152, thereby detecting the temperature T. Subsequently, in step 202, the slave CPU determines whether or not the temperature T is equal to or lower than a predetermined threshold temperature Tth. In the case where the temperature T is equal to or lower than the predetermined threshold temperature Tth (202: Yes), the slave CPU proceeds to step 203. Meanwhile, in the case where the temperature T is higher than the threshold temperature Tth (202: No), the slave CPU proceeds to step 205.

When the slave CPU proceeds from step 202 to step 203, the slave CPU controls the power supply module 11 so that electrical power is supplied to the communication device 13. Next, in step 204, the slave CPU controls the pulse output module 153 so that the pulse signal PS is not output from the terminal 153a. Subsequently, the slave CPU returns to step 201.

Meanwhile, when the slave CPU proceeds from step 202 to step 205, the slave CPU controls the power supply module 11 so that no electrical power is supplied to the communication device 13. Next, in step 206, the slave CPU controls the pulse output module 153 so that the pulse signal PS is output from the terminal 153a. Subsequently, the slave CPU returns to step 201.

The master CPU starts a diagnosing process from step 300. By processes of steps 301 to 303, the master CPU determines whether or not the communication device 13 and the communication device 22 can communicate with each other. Specifically, in step 301, the master CPU tries to read out the communication error flag F of the communication device 22. Next, in step 302, the master CPU determines whether or not the master CPU has succeeded in reading out the communication error flag F. In the case where the master CPU has succeeded in reading out the communication error flag F (302: Yes), the master CPU proceeds to step 303.

In step 303, the master CPU determines whether or not the value of the read-out communication error flag F is "0." In the case where the value of the read-out communication error flag F is "0" (303: Yes), the master CPU determines that "the communication device 13 and the communication device 22 can communicate with each other (they are in a communicatable state)" and returns to step 301. Meanwhile, in the case where the value of the read-out communication error flag F is "1" (303: No), the master CPU determines that "the communication device 13 and the communication device 22 cannot communicate with each other (they are in an uncommunicatable state)" and proceeds to step 304.

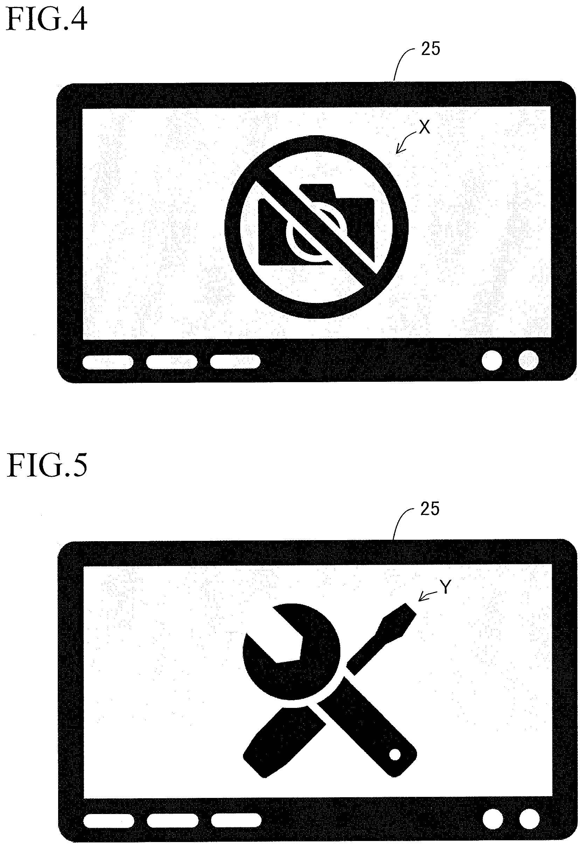

In step 304, the master CPU determines whether or not the pulse signal is input to the terminal 241b (whether or not the master CPU is receiving the pulse signal PS). In the case where the pulse signal is input to the terminal 241b (304: Yes), the master CPU proceeds to step 305 so as to cause the display unit 25 to display an image X indicating that "the operation of the onboard camera apparatus 1 (the communication device 13) has been stopped" (see FIG. 4) and returns to step 301. In contrast, in the case where the pulse signal PS is not input to the terminal 241b (when the logic level of the terminal 241b remains "H" for a period of time longer than a period of time corresponding to the pulse width of the pulse signal PS) (304: No), the master CPU proceeds to step 306. In step 306, the master CPU causes the display unit 25 to display an image Y indicating that "the onboard camera apparatus 1 must be repaired" (see FIG. 5) and returns to step 301.

Meanwhile, in the case where the master CPU has failed to read out the communication error flag F in step 301 (in the case where the communication device 22 has failed to respond to the read-out request), it is possible to determine that "the communication device 13 and the communication device 22 cannot communicate with each other (they are in an uncommunicatable state" (the communication device 22 is in failure). Therefore, in this case, the master CPU makes a "No" determination in step 302, proceeds to step 306 so as to cause the display unit 25 to display the image Y of FIG. 5, and returns to step 301. Notably, in this case, the master CPU may cause the display unit 25 to display an image which differs from the image Y and which indicates that "the communication device 13 and the communication device 22 cannot communicate with each other (they are in an uncommunicatable state)."

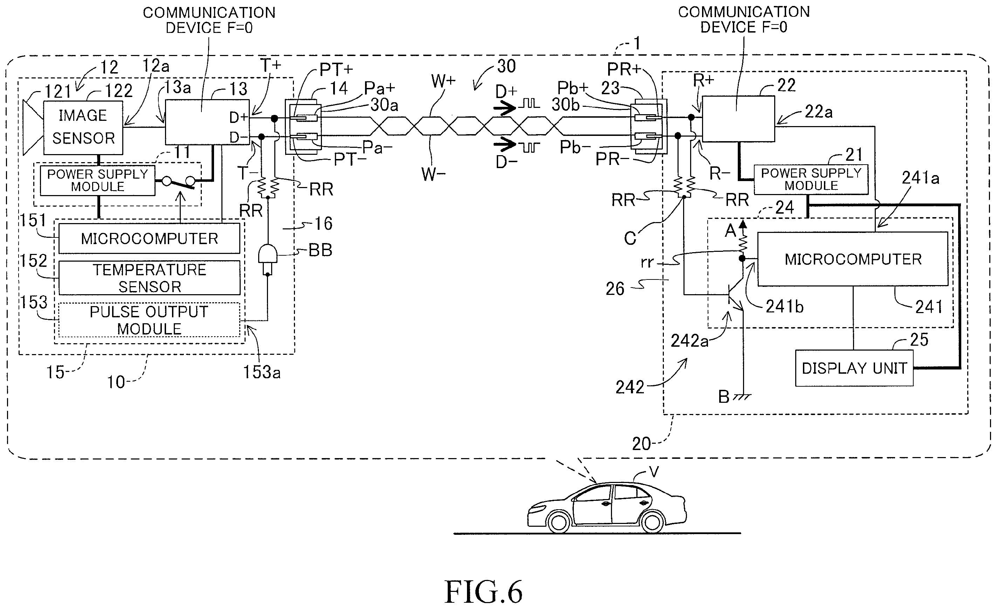

Next, operation of the onboard camera apparatus 1 at normal temperature (when the temperature T is equal to or lower than the threshold temperature Tth) will be described specifically with reference to FIG. 6. Notably, in the example of FIG. 6, all the components of the onboard camera apparatus 1 can function normally (namely, the components are not in failure).

The digital camera 12 generates original image data representing an original image obtained by photographing a scene ahead of the vehicle V. The generated original image data is output from the terminal 12a and is input to the terminal 13a of the communication device 13. In this case, electrical power is being supplied to the communication device 13 (see step 203 of FIG. 2). The communication device 13 converts the original image data to the low-voltage differential signals D+ and D-. The low-voltage differential signals D+ and D- are output from the terminals T+ and T- and are transmitted to the terminals R+ and R- of the communication device 22 via the connector 14, the communication cable 30, and the connector 23. Since the original image data is transferred after being converted to differential signals as described above, the onboard camera apparatus 1 can perform data transfer with high resistant to external noise. Notably, in this case, the pulse output module 153 does not output the pulse signal PS (see step 204 of FIG. 2). The communication device 22 converts the low-voltage differential signals D+ and D- to the original image data (reconstructs the original image data). The reconstructed original image data is output from the terminal 22a and is input to the terminal 241a of the master CPU. In this example, the communication device 13 and the communication device 22 can communicate with each other (they are in a communicatable state). Namely, the value of the communication error flag F of the communication device 22 is "0." Therefore, the master CPU does not cause the display unit 25 to display the image X or the image Y. Furthermore, the master CPU executes the above-described image recognition process on the basis of the original image data. Notably, as described above, the low-voltage differential signals D+ and D- vary in such a manner that they become opposite in phase to each other, with a single common mode voltage (for example, 1.2 V) serving as the center of the variation, and the potential difference between the two signals is 350 mV. The above-mentioned common mode voltage is applied to the connection point C between the resistors RR of the master unit 20. Accordingly, the transistor 242a is maintained in an ON state, and the logic level of the terminal 241b remains "L" and does not change.

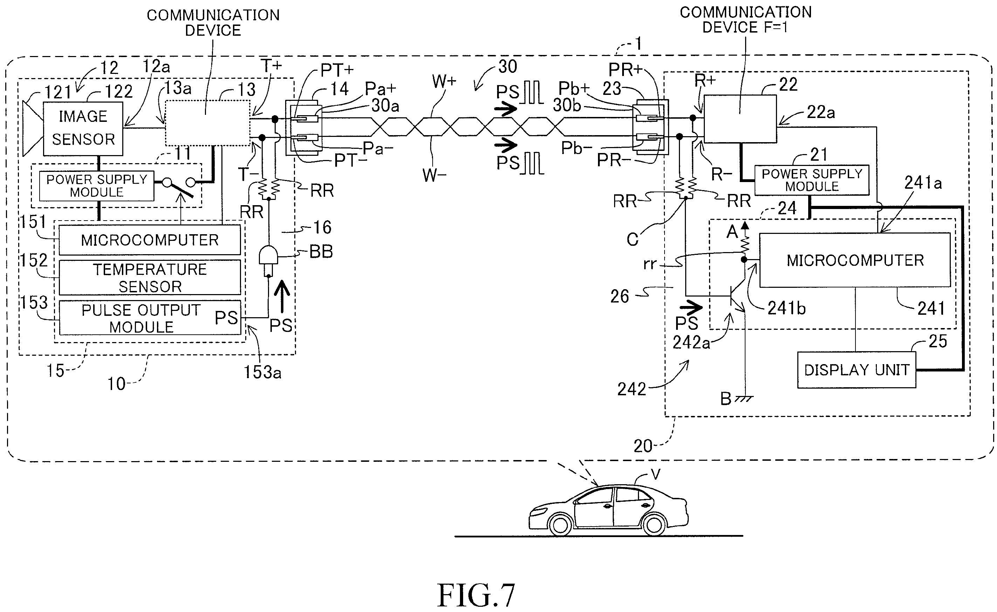

Next, operation of the onboard camera apparatus 1 at high temperature (when the temperature T of the slave unit 10 is higher than the threshold temperature Tth) will be described specifically with reference to FIG. 7. Notably, in the example of FIG. 7, all the components of the onboard camera apparatus 1 can function normally (namely, the components are not in failure).

No electric power is supplied to the communication device 13 (see step 205 of FIG. 2). Namely, operation of the communication device 13 has been stopped. Therefore, in this case, the value of the communication error flag F of the communication device 22 is "1." Furthermore, in this case, the pulse output module 153 outputs the pulse signal PS, whose voltage is 3.3 V (see step 206 of FIG. 2). This pulse signal PS is transmitted to the resistors RR of the master unit 20 via the communication cable 30. The pulse signal PS transmitted via the electrical wire W+ of the communication cable 30 and the pulse signal PS transmitted via the electrical wire W- of the communication cable 30 are in phase with each other. Therefore, the potential at the connection point C between the resistors RR of the master unit 20 changes in accordance with the pulse signal PS (a signal whose voltage changes from 0 V to 3.3 V and then changes to 0 V). When a voltage of 3.3 V is applied to the base of the transistor 242a, the transistor 242a turns on. When application of the voltage to the base of the transistor 242a is stopped (i.e., when the voltage applied to the base of the transistor 242a becomes 0 V), the transistor 242a turns off. As a result, the transistor 242a repeatedly turns on and off at intervals corresponding to the period of the pulse signal PS. Consequently, the pulse signal PS (strictly speaking, a pulse signal whose phase is opposite the phase of the pulse signal PS) is input to the terminal 241b. The master CPU determines that the pulse signal PS is input to the terminal 241b and causes the display unit 25 to display the image X (see step 305 of FIG. 3). Notably, in this case, since the original image data is not supplied to the master CPU, the master CPU does not execute the above-described image recognition process.

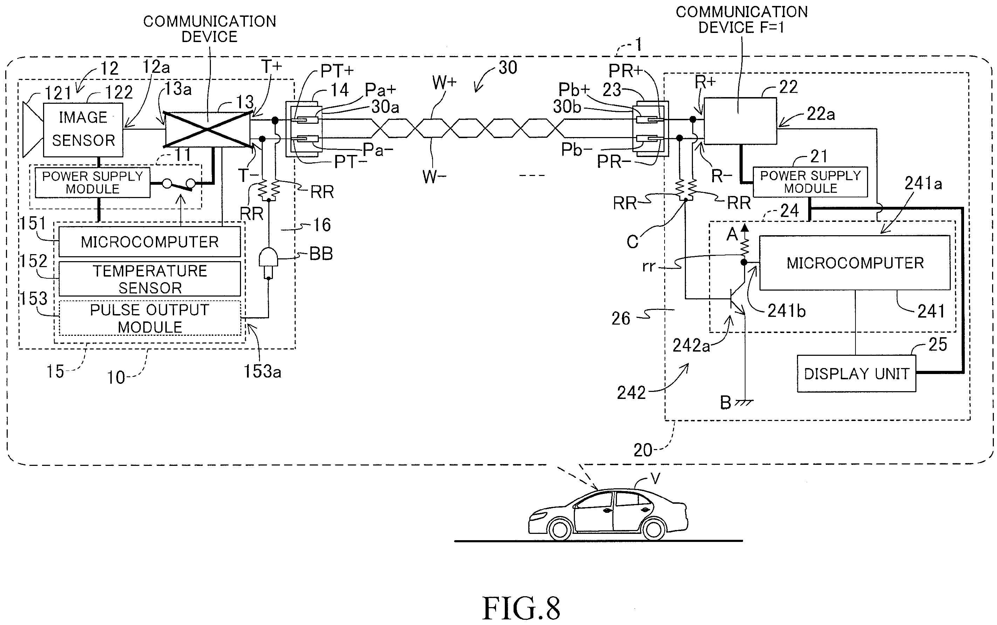

Next, operation of the onboard camera apparatus 1 at normal temperature in the case where the communication device 13 is in failure and the remaining components are normal will be described specifically with reference to FIG. 8.

In this case, since the communication device 13 is in failure, the communication device 13 and the communication device 22 cannot communicate with each other. Namely, the value of the communication error flag F of the communication device 22 is "1." Furthermore, since the temperature T is equal to or lower than the threshold temperature Tth, the pulse signal PS is not output from the pulse output module 153 (see step 204 of FIG. 2). Therefore, in this case, the master CPU causes the display unit 25 to display the image Y (see step 306 of FIG. 3).

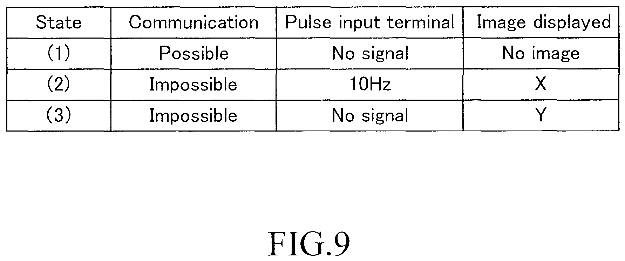

The above-described matters are summarized in a table shown in FIG. 9. As shown in this table, in the onboard camera apparatus 1, the master CPU controls the content displayed by the display unit 25 on the basis of the results of the determination as to whether or not the communication device 13 and the communication device 22 can communicate with each other and the results of the determination as to whether or not the pulse signal PS is input to the terminal 241b (pulse input terminal). Notably, in the case where the communication device 13 and the communication device 22 can communicate with each other and the pulse signal PS is not input to the terminal 241b (in the case where the onboard camera apparatus 1 operates normally (see State (1) of FIG. 9)), the master CPU does not cause the display unit 25 to display an image regarding the state of the onboard camera apparatus 1. However, in this case, the master CPU may cause the display unit 25 to display an image indicating that "the onboard camera apparatus 1 operates normally." A user (the driver or the owner of the vehicle V) and a person in charge of repairing the onboard camera apparatus 1 (hereinafter referred to as a "repair person") can take the following measures on the basis of the image (the image X or the image Y) displayed on the display unit 25.

The image X is displayed in the case where the temperature of the digital camera 12 is high and operation of the communication device 13 has been stopped (see State (2) of FIG. 9). In this case, at least the power supply module 11, the controller 15, the communication cable 30, the power supply module 21, and the controller 24 operate normally. Therefore, in this case, the user is only required to wait until the temperature T decreases and the communication device 13 resumes its operation.

Notably, when the temperature T becomes equal to or lower than the threshold temperature Tth (or a temperature lower than the threshold temperature Tth by a predetermined positive temperature), the slave CPU controls the power supply module 11 so that electric power is supplied to the communication device 13. Moreover, the slave CPU controls the pulse output module 153 so that the pulse signal PS is not output from the pulse output module 153. When the master CPU detects that the pulse signal PS is not input to the terminal 241b, the master CPU restarts (resets) the communication device 22. In this manner, the onboard camera apparatus 1 enters a state in which the original image data can be transferred from the slave unit 10 to the master unit 20.

The image Y is displayed in the case where the communication between the communication device 13 and the communication device 22 is impossible and the pulse signal PS is not input to the master unit 20 (see State (3) of FIG. 9).

Accordingly, as exemplified in FIG. 8, the image Y is displayed in the case where the communication device 13 is in failure. The image Y is also displayed when any of the following failures has occurred.
- Failure of the power supply module 11
- Failure of the slave CPU
- Wire breakage of the communication cable 30 and/or plugging failure between a plug and a connector (contact failure of a contact pin(s))
- Failure of the communication device 22

Therefore, in the case where the image Y is displayed, the user must request repair of the system including the onboard camera apparatus 1.

In this case, the repair person may take, for example, the following measures.
- The repair person temporarily removes the plug of the communication cable 30 from the connector and again plugs the plug into the connector.
- The repair person exchanges the slave unit 10.
- The repair person exchanges the master unit 20.
- The repair person exchanges the communication cable 30.

Notably, preferably, the repair person observes signals output from the various terminals by using an oscilloscope so as to specify a failure part and specify a component(s) which must be exchanged.

Notably, in the case where the image X is displayed, it is expected that the onboard camera apparatus 1 becomes usable when the temperature T decreases. Here, it is supposed that the temperature of the digital camera 12 is high, operation of the communication device 13 has been stopped, and the communication device 13 or the communication device 22 is in failure. In this case, when the temperature T decreases, output of the pulse signal from the pulse output module 153 stops. However, since the communication device 13 and the communication device 22 cannot communicate with each other, the image Y is displayed consequently. In this case, the repair person can assume that at least the power supply module 11, the controller 15, the communication cable 30, the power supply module 21, and the controller 24 operate normally, and one or more of the remaining components are in failure. Therefore, in this case, the repair person need not exchange the communication cable 30 and is only required to exchange both or one of the slave unit 10 and the master unit 20. Notably, the repair person may observe the signals output from the terminal 12a, the terminals T+ and T-, the terminal 23a, etc. by using an oscilloscope, thereby specifying a failure part. In this case, the repair person exchanges a unit containing the specified failure part.

### Effect of the first embodiment:

In the onboard camera apparatus 1, when the temperature T of the slave unit 10 is higher than the threshold temperature Tth, operation of the communication device 13 is stopped. Furthermore, in this state, the pulse signal PS is output from the pulse output module 153. Namely, the pulse signal PS indicates that operation of the communication device 13 has been stopped. In this state, the communication device 13 and the communication device 22 do not communicate with each other. Namely, the communication cable 30 is not used as a transmission path for the low-voltage differential signals D+ and D- (signals obtained by converting the original image data). In this state, the communication cable 30 is used as a transmission path for the pulse signal PS. Accordingly, the number of components of the onboard camera apparatus 1 and the component cost of the onboard camera apparatus 1 can be reduced as compared with the case where a communication cable, a bus bar, or the like which serves as the transmission path for the pulse signal PS is provided separately from the transmission path for the low-voltage differential signals D+ and D-.

### <Second embodiment>

### Configuration:

The configuration of an onboard camera apparatus 1A according to a second embodiment of the present invention is identical with the configuration of the onboard camera apparatus 1 shown in FIG. 1.

### Operation:

Operation of the onboard camera apparatus 1A will be roughly described. In the onboard camera apparatus 1A, when the temperature T is higher than the threshold temperature Tth, as in the case of the onboard camera apparatus 1, the slave CPU stops the operation of the communication device 13 and causes the pulse output module 153 to output the pulse signal PS. The frequency of the pulse signal PS in this case is 10 Hz, which is the first frequency. Meanwhile, in the onboard camera apparatus 1A, when the temperature T is equal to or lower than the threshold temperature Tth and the value of the communication error flag F of the communication device 13 is "1," the slave CPU causes the pulse output module 153 to output the pulse signal PS. The frequency of the pulse signal PS in this case is a second frequency different from the first frequency. In the present embodiment, the second frequency is 20 Hz.

The master CPU determines (diagnoses) the state of the onboard camera apparatus 1A on the basis of the communication error flag F of the communication device 22 and the frequency of the pulse signal input to the terminal 241b, and controls the contents displayed by the display unit 25 on the basis of the results of the determination.

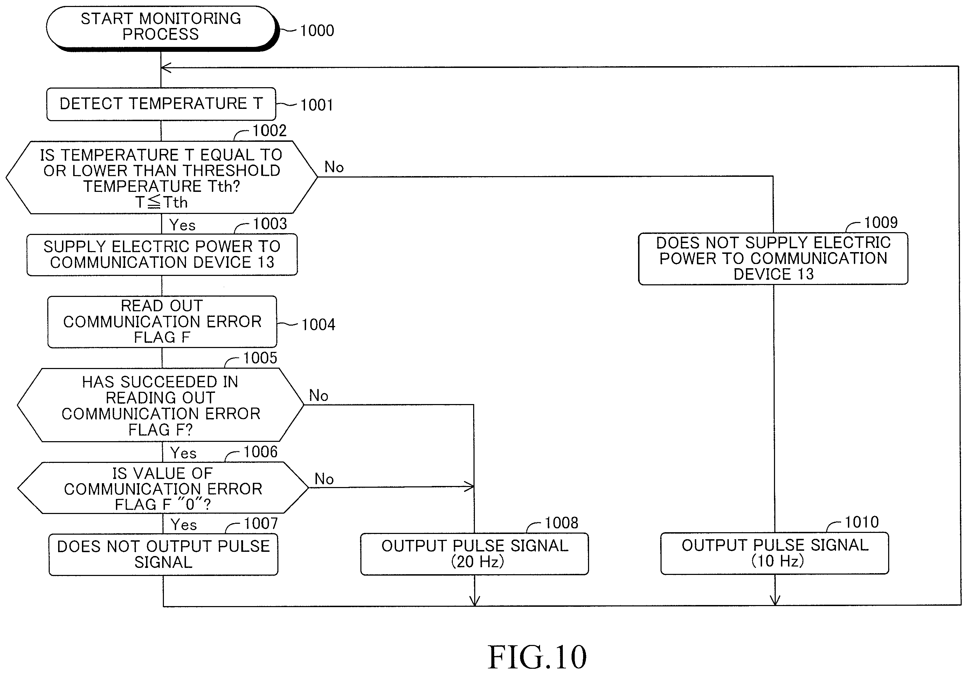

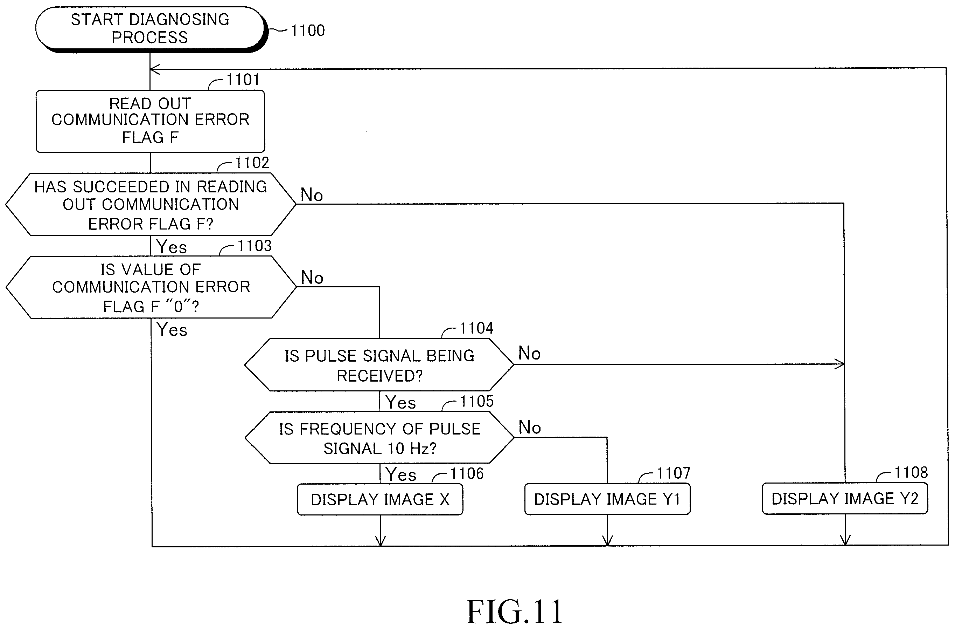

Next, specific operations of the slave CPU and the master CPU will be described. When the engine of the vehicle V is started, the slave CPU starts execution of a monitoring program shown in FIG. 10, and the master CPU starts execution of a diagnosis program shown in FIG. 11.

The slave CPU of the onboard camera apparatus 1A starts a monitoring process from step 1000. Next, in step 1001, the slave CPU obtains temperature data from the temperature sensor 152, thereby detecting the temperature T. Subsequently, in step 1002, the slave CPU determines whether or not the temperature T is equal to or lower than the predetermined threshold temperature Tth. In the case where the temperature T is equal to or lower than the predetermined threshold temperature Tth (1002: Yes), the slave CPU proceeds to step 1003.

In step 1003, the slave CPU controls the power supply module 11 so that electrical power is supplied to the communication device 13. Next, in step 1004, the slave CPU tries to read out a communication error flag F from a flag register of the communication device 13. Next, in step 1005, the slave CPU determines whether or not the slave CPU has succeeded in reading out the communication error flag F. In the case where the slave CPU has succeeded in reading out the communication error flag F (1005: Yes), the slave CPU proceeds to step 1006. Meanwhile, in the case where the slave CPU has failed to read out the communication error flag F (the communication device 13 has failed to respond the read-out request (1005: No)), the slave CPU determines that "the communication device 13 and the communication device 22 cannot communicate with each other (they are in an uncommunicatable state)" (the communication device 13 is in failure) and proceeds to step 1008, which will be described later.

When the slave CPU proceeds from step 1005 to step 1006, the slave CPU determines whether or not the value of the read-out communication error flag F is "0." In the case where the value of the read-out communication error flag F is "0" (1006: Yes), the slave CPU determines that "the communication device 13 and the communication device 22 can communicate with each other (they are in a communicatable state)" and proceeds to step 1007. In step 1007, the slave CPU controls the pulse output module 153 so that the pulse signal PS is not output from the terminal 153a. Subsequently, the slave CPU returns to step 1001.

In contrast, in the case where the value of the read-out communication error flag F is "1" (1006: No), the slave CPU determines that "the communication device 13 and the communication device 22 cannot communicate with each other (they are in an uncommunicatable state)" and proceeds to step 1008.

When the slave CPU proceeds from step 1005 or step 1006 to step 1008, the slave CPU controls the pulse output module 153 so that the pulse signal PS is output from the terminal 153a. At that time, the slave CPU controls the pulse output module 153 so that the frequency of the pulse signal PS becomes 20 Hz (the second frequency). Subsequently, the slave CPU returns to step 1001.

In contrast, in the case where the temperature T obtained in step 1001 is higher than the threshold temperature Tth (1002: No), the slave CPU proceeds to step 1009. In step 1009, the slave CPU controls the power supply module 11 so that no electrical power is supplied to the communication device 13. Subsequently, the slave CPU proceeds to step 1010 so as to control the pulse output module 153 so that the pulse signal PS is output from the terminal 153a. At that time, the slave CPU controls the pulse output module 153 so that the frequency of the pulse signal PS becomes 10 Hz (the first frequency). Subsequently, the slave CPU returns to step 1001.

The master CPU of the onboard camera apparatus 1A starts a diagnosing process from step 1100. By processes of steps 1101 to 1103, the master CPU determines whether or not the communication device 13 and the communication device 22 can communicate with each other. Specifically, in step 1101, the master CPU tries to read out the communication error flag F of the communication device 22. Next, in step 1102, the master CPU determines whether or not the master CPU has succeeded in reading out the communication error flag F. In the case where the master CPU has succeeded in reading out the communication error flag F (1102: Yes), the master CPU proceeds to step 1103.

When the master CPU proceeds from step 1102 to step 1103, the master CPU determines whether or not the value of the read-out communication error flag F is "0." In the case where the value of the read-out communication error flag F is "0" (1103: Yes), the master CPU determines that "the communication device 13 and the communication device 22 can communicate with each other (they are in a communicatable state)" and returns to step 1101. Meanwhile, in the case where the value of the read-out communication error flag F is "1" (1103: No), the master CPU determines that "the communication device 13 and the communication device 22 cannot communicate with each other (they are in an uncommunicatable state)" and proceeds to step 1104.

When the master CPU proceeds from step 1103 to step 1104, the master CPU determines whether or not the pulse signal PS is input to the terminal 241b (whether or not the master CPU is receiving the pulse signal PS). In the case where the pulse signal PS is input to the terminal 241b (1104: Yes), the master CPU proceeds to step 1105.

When the master CPU proceeds from step 1104 to step 1105, the master CPU determines whether or not the frequency of the pulse signal PS input to the terminal 241b is 10 Hz. In the case where the frequency of the pulse signal PS is 10 Hz (1105: Yes), the master CPU proceeds to step 1106. Meanwhile, in the case where the frequency of the pulse signal PS is not 10 Hz (the frequency of the pulse signal PS is 20 Hz) (1105: No), the master CPU proceeds to step 1107.

When the master CPU proceeds from step 1105 to step 1106, the master CPU causes the display unit 25 to display an image X indicating that "operation of the onboard camera apparatus 1A (the communication device 13) has been stopped" (see FIG. 4) and returns to step 1101.

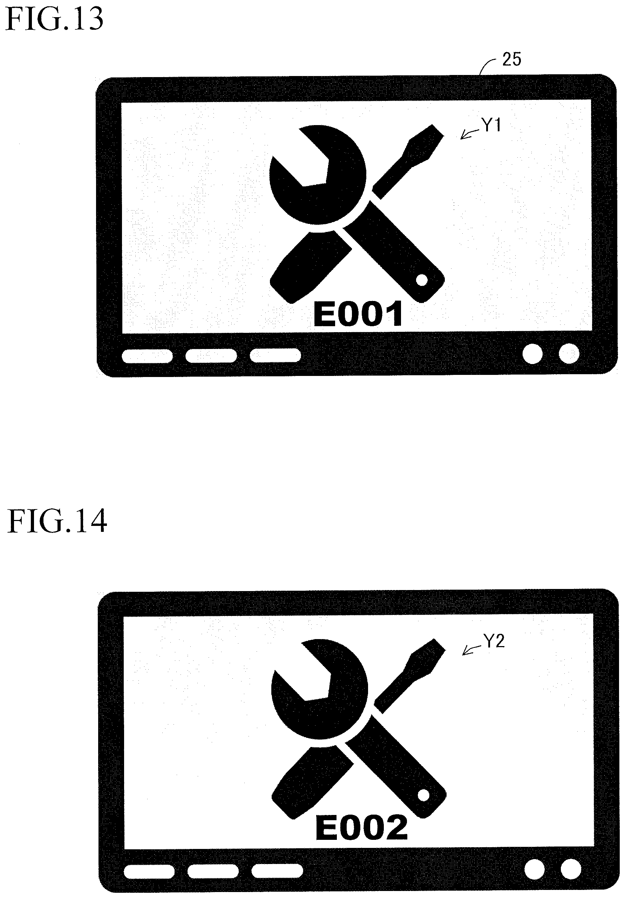

When the master CPU proceeds from step 1105 to step 1107, the master CPU causes the display unit 25 to display a first image Y1 indicating that "the onboard camera apparatus 1A must be repaired" (see FIG. 13) and returns to step 1101.

Notably, in the case where the master CPU has failed to read out the communication error flag F (in the case where the communication device 22 has failed to respond to the read-out request) (1102: No), the master CPU determines that "the communication device 13 and the communication device 22 cannot communicate with each other (they are in an uncommunicatable state) and the communication device 22 is in failure," and proceeds to step 1108. Furthermore, when the value of the communication error flag F is 1 (1103: No) and the pulse signal PS is not input to the terminal 241b (1104: No), the master CPU determines that the slave unit 10 and the communication cable 30, etc. are in failure and proceeds to step 1108.

In step 1108, the master CPU causes the display unit 25 to display a second image Y2 indicating that "the onboard camera apparatus 1A must be repaired" (see FIG. 14) and returns to step 1101.

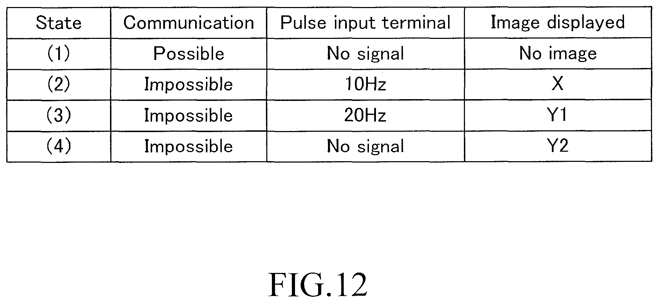

The above-described matters are summarized in a table shown in FIG. 12. As shown in this table, in the onboard camera apparatus 1A, the master CPU controls the content displayed by the display unit 25 on the basis of the results of the following three determinations.
- The results of the determination as to whether or not the communication device 13 and the communication device 22 can communicate with each other.
- The results of the determination as to whether or not the pulse signal PS is input to the terminal 241b (pulse input terminal).
- The results of the determination of the frequency of the pulse signal PS (the first frequency or the second frequency).

Notably, in the present embodiment, in the case where the communication device 13 and the communication device 22 can communicate with each other and the pulse signal PS is not input to the terminal 241b (in the case where the onboard camera apparatus 1A operates normally (see State (1) of FIG. 12)), the master CPU does not cause the display unit 25 to display an image regarding the state of the onboard camera apparatus 1A. However, in this case, the master CPU may cause the display unit 25 to display an image indicating that "the onboard camera apparatus 1A operates normally." The user (the driver or the owner of the vehicle V) and the repair person for the vehicle V can take the following measures on the basis of the image displayed (the image X, the image Y1, or the image Y2) displayed on the display unit 25.

As in the case of the onboard camera apparatus 1, the image X is displayed in the case where the temperature of the digital camera 12 is high and operation of the communication device 13 has been stopped (see State (2) of FIG. 12). Therefore, in the case where the image X is displayed, the user is only required to wait until the temperature T decreases and the communication device 13 resumes its operation.

In the case where the image Y1 or the image Y2 is displayed, the user must request the repair person to repair the onboard camera apparatus 1A. In this case, the repair person can take the following measures. Notably, since it is rare that failures occur simultaneously at a plurality of parts in the onboard camera apparatus 1A, a state in which a failure has occurred at one part in the onboard camera apparatus 1A is presumed in the following description.

The image Y1 is displayed in the case where "although the temperature of the digital camera 12 is normal, the communication device 13 and the communication device 22 cannot communicate with each other and the pulse signal PS is transmitted from the slave unit 10 and the master unit 20" (see State (3) of FIG. 12). Namely, in the case where the image Y1 is displayed, the power supply module 11, the controller 15, and the communication cable 30 operate normally. In other words, in the case where the image Y1 is displayed, the repair person can assume that one of the following failures has occurred.
- Failure of the communication device 13
- Failure of the communication device 22

Therefore, the repair person is only required to intensively investigate the above-mentioned parts, thereby specifying a failure part, and exchange a unit containing the specified part.

The image Y2 is displayed in the case where "although the temperature of the digital camera 12 is normal, the communication device 13 and the communication device 22 cannot communicate with each other and the pulse signal PS is not transmitted from the slave unit 10 and the master unit 20" (see State (4) of FIG. 12). In this case, the repair person can assume that one of the following failures has occurred.
- Failure of the power supply module 11
- Failure of the controller 15
- Failure of the communication cable 30 (for example, wire breakage or contact failure of a contact pin(s))

Therefore, the repair person is only required to intensively investigate the above-mentioned parts, thereby specifying a failure part, and exchange a unit containing the specified part or the communication cable 30.

### Effect of the second embodiment:

The onboard camera apparatus 1A yields the following effect in addition to the effect yielded by the onboard camera apparatus 1. Namely, whereas the onboard camera apparatus 1 allows the user and the repair person to distinguish the three states shown in FIG. 9, the onboard camera apparatus 1A allows the user and the repair person to distinguish the four states shown in FIG. 12. In other words, the onboard camera apparatus 1A allows the repair person to easily specify a failure part(s) of the onboard camera apparatus 1A and quickly complete repair.

The present invention is not limited to the above-described embodiments, and, as will be described below, various modifications may be employed within the scope of the invention.

### First modification:

The above-described embodiments employ a transfer scheme (protocol) in which the original image data is converted to the low-voltage differential signals D+ and D- in the slave unit 10, and the low-voltage differential signals D+ and D- are transmitted to the master unit 20 via the communication cable 30. However, the scheme for transferring the original image data is not limited to that employed by the above-described embodiments, and a well-known serial data transfer scheme, a well-known parallel data transfer scheme, etc. may be employed.

### Second modification:

The frequencies (the first frequency and the second frequency) of the pulse signal PS are mere examples, and other frequencies may be employed. Moreover, in place of the pulse signal PS, a signal having a predetermined bit pattern may be employed. In this case, when the temperature T is higher than the threshold temperature Tth in the onboard camera apparatus 1A, the slave CPU causes the pulse output module 153 to output a signal S1 having a first bit pattern. In contrast, when the temperature T is equal to or lower than the threshold temperature Tth and the value of the communication error flag F of the communication device 13 is "1" in the onboard camera apparatus 1A, the slave CPU causes the pulse output module 153 to output a signal S2 having a second bit pattern different from the first bit pattern. The master CPU of the onboard camera apparatus 1A distinguishes the case where the signal having the first bit pattern is transmitted and the case where the signal having the second bit pattern is transmitted.

### Third modification:

The master CPU causes the display unit 25 to display the image X, the image Y, etc. which represent the results (diagnostic results) obtained as a result of execution of the diagnosis program. However, the method of providing the diagnostic results is not limited to the method employed by the above-described embodiments, and any method may be employed so long as some sort of information representing the diagnostic results is provided to the user and the repair person. For example, sounds corresponding to the image X, the image Y, etc., respectively, may be generated. Furthermore, the diagnostic results may be stored in a nonvolatile memory, or transmitted to an external server by using an onboard communication device, together with, for example, a time (date and time) when the diagnostic results were obtained. In this case, the user and the repair person can read out the diagnostic results from the nonvolatile memory or the external server and utilize the diagnostic results for repair, etc.

### Fourth modification:

The above-described embodiments are examples in which the present invention is applied to onboard camera apparatuses. However, the present invention may be applied to other vehicular control systems (vehicular control systems each of which includes two units connected together via a communication cable and has a self-diagnosis function).

## Claims

1. A vehicular control system (1, 1A) comprising:
a first unit (10) configured to be mounted on a vehicle and configured to transmit data, wherein the first unit (10) includes a transmitter (13) for transmitting the data and the transmitter (13) has terminals (T+, T-) for outputting the data;
a second unit (20) configured to be mounted on the vehicle and configured to receive the data; and
a data communication line (W+, W-) configured to be mounted on the vehicle and enabling transfer of the data from the first unit to the second unit by establishing connection between a first connection portion (Pa+, Pa-) connected to the first unit and a second connection portion (Pb+, Pb-) connected to the second unit,
wherein the vehicular control system further comprises:
a monitoring apparatus (15) for monitoring the first unit; and
an information providing apparatus (24, 25) for supplying a piece of information to a user of the vehicle,
wherein the monitoring apparatus (15) is configured to determine whether the first unit is in a data transfer performable state in which the first unit can transfer the data to the second unit via the data communication line or in a data transfer nonperformable state in which the first unit cannot transfer the data to the second unit via the data communication line,
to transmit a predetermined anomaly reporting signal (PS) different from the data from the first connection portion to the second connection portion via the data communication line in the case where the monitoring apparatus determines that the first unit is in the data transfer nonperformable state, the monitoring apparatus (15) having a terminal (153a) for outputting the anomaly reporting signal (PS), and
to not transmit the anomaly reporting signal from the first connection portion to the second connection portion via the data communication line in the case where the monitoring apparatus determines that the first unit is in the data transfer performable state,
wherein the information providing apparatus is configured to detect whether or not the anomaly reporting signal has been transmitted to the second connection portion and update the information (X, Y, Y1, Y2) provided to the user in accordance with results of the detection and wherein the terminals (T+, T-) of the transmitter are connected to the first connection portion (Pa), and the terminal (153a) of the monitoring apparatus (15) are connected to the first connection portion (Pa), wherein
the monitoring apparatus (15) is configured to determine that the first unit is in the data transfer performable state in the case where a component which constitutes the first unit has a temperature equal to or lower than a predetermined threshold temperature,
the monitoring apparatus (15) is configured to determine that the first unit is in the data transfer nonperformable state in the case where the component which constitutes the first unit has a temperature higher than the predetermined threshold temperature,
wherein the first unit (10) includes a power supply module (11) for supplying electric power to the transmitter (13), and
wherein the monitoring apparatus (15) is configured to permit supply of electric power from the power supply module (11) to the transmitter (13) in the case where the component which constitutes the first unit (10) has a temperature equal to or lower than the predetermined threshold temperature (Tth), and to interrupt the supply of electric power from the power supply module (11) to the transmitter (13) in the case where the component which constitutes the first unit (10) has a temperature higher than the predetermined threshold temperature (Tth).

2. A vehicular control system according to claim 1, wherein the monitoring apparatus (15) is configured
to transmit, as the anomaly reporting signal, a first signal from the first connection portion to the second connection portion via the data communication line in the case where the monitoring apparatus determines that the first unit is in the data transfer nonperformable state because a component which constitutes the first unit is in a predetermined particular state, and
to transmit, as the anomaly reporting signal, a second signal, which is different from the first signal, from the first connection portion to the second connection portion via the data communication line in the case where the monitoring apparatus determines that the component which constitutes the first unit is in a state different from the particular state, and the first unit is in the data transfer nonperformable state.

## Patentansprüche

1. Fahrzeugsteuerungssystem (1, 1A), umfassend:
eine erste Einheit (10), die konfiguriert ist, um an einem Fahrzeug montiert zu sein, und konfiguriert ist, um Daten zu übertragen, wobei die erste Einheit (10) einen Sender (13) zum Übertragen der Daten beinhaltet und der Sender (13) Anschlüsse (T+, T-) zum Ausgeben der Daten aufweist;
eine zweite Einheit (20), die konfiguriert ist, um an dem Fahrzeug montiert zu sein, und konfiguriert ist, um die Daten zu empfangen; und
eine Datenkommunikationsleitung (W+, W-), die konfiguriert ist, um an dem Fahrzeug montiert zu sein und eine Übertragung der Daten von der ersten Einheit zu der zweiten Einheit zu ermöglichen, indem eine Verbindung zwischen einem ersten Verbindungsabschnitt (Pa+, Pa-), der mit der ersten Einheit verbunden ist, und einem zweiten Verbindungsabschnitt (Pb+, Pb-), der mit der zweiten Einheit verbunden ist, hergestellt wird,
wobei das Fahrzeugsteuerungssystem ferner Folgendes umfasst:
eine Überwachungsvorrichtung (15) zum Überwachen der ersten Einheit; und
eine Informationsbereitstellungsvorrichtung (24, 25) zum Zuführen eines Informationsteils zu einem Benutzer des Fahrzeugs,
wobei die Überwachungsvorrichtung (15) konfiguriert ist, um zu bestimmen, ob die erste Einheit in einem Datenübertragung-Durchführbarkeitszustand ist, in dem die erste Einheit die Daten über die Datenkommunikationsleitung an die zweite Einheit übertragen kann, oder in einem Datenübertragung-Nichtdurchführbarkeitszustand ist, in dem die erste Einheit die Daten nicht über die Datenkommunikationsleitung an die zweite Einheit übertragen kann,
um ein vorbestimmtes Anomalie-Berichtssignal (PS), das sich von den Daten unterscheidet, in dem Fall über die Datenkommunikationsleitung von dem ersten Verbindungsabschnitt zu dem zweiten Verbindungsabschnitt zu übertragen, in dem die Überwachungsvorrichtung bestimmt, dass die erste Einheit in dem Datenübertragung-Nichtdurchführbarkeitszustand ist, wobei die Überwachungsvorrichtung (15) einen Anschluss (153a) zum Ausgeben des Anomalie-Berichtssignals (PS) aufweist, und
um das Anomalie-Berichtssignal über die Datenkommunikationsleitung nicht von dem ersten Verbindungsabschnitt zu dem zweiten Verbindungsabschnitt zu übertragen, wenn die Überwachungsvorrichtung bestimmt, dass die erste Einheit in dem Datenübertragung-Durchführbarkeitszustand ist,
wobei die Informationsbereitstellungsvorrichtung konfiguriert ist, um zu erkennen, ob das Anomalie-Berichtssignal an den zweiten Verbindungsabschnitt übertragen wurde, und die dem Benutzer bereitgestellten Informationen (X, Y, Y1, Y2) gemäß den Resultaten der Erkennung zu aktualisieren, und wobei die Anschlüsse (T+, T-) des Senders mit dem ersten Verbindungsabschnitt (Pa) verbunden sind, und der Anschluss (153a) der Überwachungsvorrichtung (15) mit dem ersten Verbindungsabschnitt (Pa) verbunden ist,
wobei
die Überwachungsvorrichtung (15) konfiguriert ist, um zu bestimmen, dass die erste Einheit in dem Datenübertragung-Durchführbarkeitszustand ist, in einem Fall, in dem eine Komponente, die die erste Einheit bildet, eine Temperatur aufweist, die gleich wie oder niedriger als eine vorbestimmte Schwellenwerttemperatur ist,
die Überwachungsvorrichtung (15) konfiguriert ist, um zu bestimmen, dass die erste Einheit in dem Datenübertragung-Nichtdurchführbarkeitszustand ist, in einem Fall, in dem die Komponente, die die erste Einheit bildet, eine Temperatur aufweist, die höher als die vorbestimmte Schwellenwerttemperatur ist,
wobei die erste Einheit (10) ein Stromversorgungsmodul (11) zum Versorgen des Senders (13) mit elektrischer Energie beinhaltet, und
wobei die Überwachungsvorrichtung (15) konfiguriert ist, um eine Versorgung mit elektrischer Energie von dem Stromversorgungsmodul (11) zu dem Sender (13) in dem Fall zuzulassen, in dem die Komponente, die die erste Einheit (10) bildet, eine Temperatur aufweist, die gleich wie oder niedriger als die vorbestimmte Schwellenwerttemperatur (Tth) ist, und die Versorgung mit elektrischer Energie von dem Energieversorgungsmodul (11) zu dem Sender (13) in dem Fall zu unterbrechen, in dem die Komponente, die die erste Einheit (10) bildet, eine Temperatur aufweist, die höher ist als die vorbestimmte Schwellenwerttemperatur (Tth).

2. Fahrzeugsteuerungssystem nach Anspruch 1, wobei die Überwachungsvorrichtung (15) konfiguriert ist,
um, als das Anomalie-Berichtssignal, ein erstes Signal über die Datenkommunikationsleitung nicht von dem ersten Verbindungsabschnitt zu dem zweiten Verbindungsabschnitt zu übertragen, in dem Fall, in dem die Überwachungsvorrichtung bestimmt, dass die erste Einheit in dem Datenübertragung-Nichtdurchführbarkeitszustand ist, weil eine Komponente, die die erste Einheit bildet, in einem vorbestimmten besonderen Zustand ist, und
um, als das Anomalie-Berichtssignal, ein zweites Signal, das sich von dem ersten Signal unterscheidet, über die Datenkommunikationsleitung von dem ersten Verbindungsabschnitt zu dem zweiten Verbindungsabschnitt zu übertragen, in dem Fall, in dem die Überwachungsvorrichtung bestimmt, dass die Komponente, die die erste Einheit bildet, in einem Zustand ist, der sich von dem besonderen Zustand unterscheidet, und die erste Einheit in dem Datenübertragung-Nichtdurchführbarkeitszustand ist.

## Revendications

1. Système de commande de véhicule (1, 1A) comprenant :
une première unité (10) configurée pour être montée sur un véhicule et configurée pour transmettre des données, la première unité (10) comprenant un émetteur (13) pour transmettre les données et l'émetteur (13) ayant des bornes (T+, T-) pour délivrer les données ;
une deuxième unité (20) configurée pour être montée sur le véhicule et configurée pour recevoir les données ; et
une ligne de communication de données (W+, W-) configurée pour être montée sur le véhicule et permettant un transfert des données depuis la première unité jusqu'à la deuxième unité en établissant une connexion entre une première partie de connexion (Pa+, Pa-) reliée à la première unité et une deuxième partie de connexion (Pb+, Pb-) reliée à la deuxième unité,
le système de commande de véhicule comprenant en outre :
un appareil de surveillance (15) destiné à surveiller la première unité ; et
un appareil de fourniture d'information (24, 25) destiné à fournir un élément d'information à un utilisateur du véhicule,
l'appareil de surveillance (15) étant configuré pour déterminer si la première unité est dans un état de réalisation de transfert de données dans lequel la première unité peut transférer les données à la deuxième unité par l'intermédiaire de la ligne de communication de données ou dans un état de non réalisation de transfert de données dans lequel la première unité ne peut pas transférer les données à la deuxième unité par l'intermédiaire de la ligne de communication de données,
pour transmettre un signal de rapport d'anomalie prédéterminé (PS) différent des données depuis la première partie de connexion jusqu'à la deuxième partie de connexion par l'intermédiaire de la ligne de communication de données dans le cas où l'appareil de surveillance détermine que la première unité est dans l'état de non réalisation de transfert de données, l'appareil de surveillance (15) ayant une borne (153a) pour délivrer le signal de rapport d'anomalie (PS), et
pour ne pas transmettre le signal de rapport d'anomalie depuis la première partie de connexion jusqu'à la deuxième partie de connexion par l'intermédiaire de la ligne de communication de données dans le cas où l'appareil de surveillance détermine que la première unité est dans l'état de réalisation de transfert de données,
l'appareil de fourniture d'information étant configuré pour détecter si le signal de rapport d'anomalie a été transmis ou non à la deuxième partie de connexion et mettre à jour l'information (X, Y, Y1, Y2) fournie à l'utilisateur en fonction de résultats de la détection, et les bornes (T+, T-) de l'émetteur étant reliées à la première partie de connexion (Pa), et la borne (153a) de l'appareil de surveillance (15) étant reliée à la première partie de connexion (Pa),
l'appareil de surveillance (15) étant configuré pour déterminer que la première unité est dans l'état de réalisation de transfert de données dans le cas où un composant qui constitue la première unité a une température égale ou inférieure à une température de seuil prédéterminée,
l'appareil de surveillance (15) étant configuré pour déterminer que la première unité est dans l'état de non réalisation de transfert de données dans le cas où le composant qui constitue la première unité a une température supérieure à la température de seuil prédéterminée,
la première unité (10) comprenant un module d'alimentation (11) destiné à délivrer de l'énergie électrique à l'émetteur (13), et
l'appareil de surveillance (15) étant configuré pour permettre une alimentation en énergie électrique depuis le module d'alimentation (11) jusqu'à l'émetteur (13) dans le cas où le composant qui constitue la première unité (10) a une température égale ou inférieure à la température de seuil prédéterminée (Tth), et pour interrompre l'alimentation en énergie électrique depuis le module d'alimentation (11) jusqu'à l'émetteur (13) dans le cas où le composant qui constitue la première unité (10) a une température supérieure à la température de seuil prédéterminée (Tth).

2. Système de commande de véhicule selon la revendication 1, dans lequel l'appareil de surveillance (15) est configuré
pour transmettre, comme signal de rapport d'anomalie, un premier signal depuis la première partie de connexion jusqu'à la deuxième partie de connexion par l'intermédiaire de la ligne de communication de données dans le cas où l'appareil de surveillance détermine que la première unité est dans l'état de non réalisation de transfert de données du fait qu'un composant qui constitue la première unité est dans un état particulier prédéterminé, et
pour transmettre, comme signal de rapport d'anomalie, un deuxième signal, qui est différent du premier signal, depuis la première partie de connexion jusqu'à la deuxième partie de connexion par l'intermédiaire de la ligne de communication de données dans le cas où l'appareil de surveillance détermine que le composant qui constitue la première unité est dans un état différent de l'état particulier, et la première unité est dans l'état de non réalisation de transfert de données.
